# EUROPEAN PATENT APPLICATION

(11) **EP 4 040 071 A1**
(43) Date of publication of application: **10.08.2022**
(21) Application number: 19948187.0
(22) Date of filing: 02.10.2019
(51) Int. Cl.: F25B 1/00, F25B 49/02

(54) **REFRIGERATION CYCLE DEVICE**

(71) Applicant: MITSUBISHI ELECTRIC CORPORATION, Chiyoda-ku Tokyo 100-8310 (JP)
(72) Inventor: HIRATSUKA, Kengo, Tokyo 100-8310 (JP); TOYAMA, Satoru, Tokyo 100-8310 (JP); KOJIMA, Kenji, Tokyo 100-8310 (JP); KOYAMA, Shuhei, Tokyo 100-8310 (JP)
(74) Representative: Trinks, Ole
(86) International application number: PCT/JP2019/038951
(87) International publication number: WO 2021/064908

(57) **Abstract**

A refrigeration cycle apparatus includes a refrigerant circuit (100) and allows refrigerant containing a halogenated hydrocarbon to circulate in the refrigerant circuit (100). The halogenated hydrocarbon has at least one of C-I bond, C-Br bond, and C-Cl bond and has no double bond, at least one of the members constituting the refrigerant circuit (100) is a copper-containing member, and at least a part of a surface of the copper-containing member does not contact the refrigerant.

## Description

### TECHNICAL FIELD

The present invention relates to a refrigeration cycle apparatus.

### BACKGROUND ART

Currently, refrigerant used for refrigeration cycle apparatuses is restricted by the Law Concerning the Discharge and Control of Fluorocarbons (enforced on April 2015), for example. Specifically, the upper limit of the GWP (Global Warming Potential) value of refrigerant to be used is restricted. There is therefore a need for refrigerant having a lower GWP value.

As a candidate of refrigerant having a low GWP value, an unsaturated halogenated hydrocarbon containing hydrofluoroolefin (HFO) or hydrochlorofluoroolefin (HCFO) having carbon-carbon double bond, for example, is under study.

Refrigerant having carbon-carbon double bond like an unsaturated halogenated hydrocarbon, however, generates acid when decomposed, as described in PTL 1 (WO 2015/060407 A1) and PTL 2 (Japanese Patent Application Laid-Open JP 2016-56 340 A), for example. Due to this acid, a problem such as corrosion of a metal member for example constituting a refrigerant circuit arises.

Meanwhile, a refrigerant mixture containing a halogenated hydrocarbon having C-I bond and having no double bond such as trifluoroiodomethane (CF₃I) that is low in GWP and non-flammable is under study, and disclosed for example in PTL 3 (Japanese National Patent Application Publication JP 2008-505 989 A).

### CITATION LIST

### PATENT LITERATURE

- Patent Literature 1:: WO 2015/060407 A1
- Patent Literature 2:: Japanese Patent Application Laid-Open JP 2016-56 340 A
- Patent Literature 3:: Japanese National Patent Application Publication JP 2008-505 989 A

### SUMMARY OF INVENTION

### TECHNICAL PROBLEM

A halogenated hydrocarbon having any one of C-I bond, C-Br bond, and C-Cl bond and having no double bond such as trifluoroiodomethane is an unstable compound that is easily decomposed. Decomposition of refrigerant results in deteriorated performance of the refrigerant and deteriorated performance of a refrigeration cycle apparatus.

An object of the present invention is therefore to provide a refrigeration cycle apparatus capable of suppressing decomposition of refrigerant containing a halogenated hydrocarbon having any one of C-I bond, C-Br bond, and C-Cl bond and having no double bond.

### SOLUTION TO PROBLEM

The present invention is a refrigeration cycle apparatus including a refrigerant circuit and allowing refrigerant containing a halogenated hydrocarbon to circulate in the refrigerant circuit.

The halogenated hydrocarbon has at least one of C-I bond, C-Br bond, and C-Cl bond and has no double bond.

At least one of members constituting the refrigerant circuit is a copper-containing member, and at least a part of a surface of the copper-containing member does not contact the refrigerant.

### ADVANTAGEOUS EFFECTS OF INVENTION

The present invention enables a refrigeration cycle apparatus to be provided that is capable of suppressing decomposition of refrigerant containing a halogenated hydrocarbon having any one of C-I bond, C-Br bond, and C-Cl bond and having no double bond, by reducing contact between the refrigerant and a copper-containing member constituting a refrigerant circuit and thereby suppressing a decomposition reaction of the refrigerant caused by contact between the refrigerant and copper.

### BRIEF DESCRIPTION OF DRAWINGS

- FIG. 1: is a schematic diagram showing an example of a refrigerant circuit of a cycle apparatus according to Embodiment 1.
- FIG. 2: is a schematic cross-sectional view showing an example of a compressor of the refrigeration cycle apparatus according to Embodiment 1.
- FIG. 3: is a graph for results of a sealed tube test, illustrating decomposition of trifluoroiodomethane due to reaction thereof with copper.
- FIG.4: is a graph for results of a sealed tube test, illustrating that decomposition of trifluoroiodomethane is suppressed by coating of the surface of copper.
- FIG. 5: is a cross-sectional view showing an example of Embodiment 2.
- FIG. 6: is a graph for results of a sealed tube test, illustrating temperature dependency of decomposition of trifluoroiodomethane due to reaction thereof with copper.

### DESCRIPTION OF EMBODIMENTS

Embodiments of the present invention are described hereinafter with reference to the drawings. The following embodiments are given by way of example, and the present invention is not limited by these embodiments.

### Embodiment 1

### Refrigerant Circuit

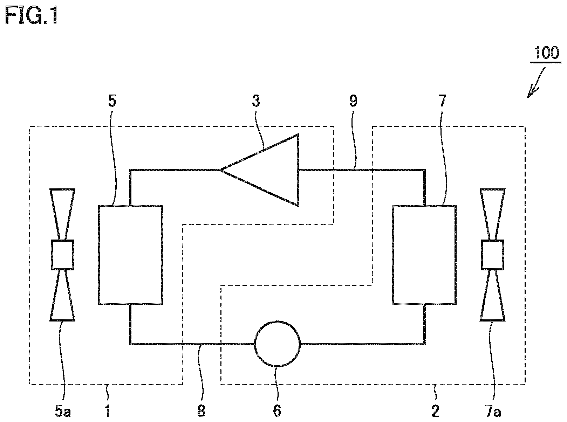

FIG. 1 is a schematic diagram showing an example of a refrigerant circuit of a refrigeration cycle apparatus according to the present embodiment. The refrigeration cycle apparatus includes an outdoor unit 1 and an indoor unit 2 for example, as shown in FIG. 1. Outdoor unit 1 and indoor unit 2 are connected to each other by a liquid pipe 8 and a gas pipe 9.

Outdoor unit 1 includes a compressor 3, a condenser 5, and an outdoor blower 5a, for example, and compressor 3 and condenser 5 are connected to each other by a pipe. Indoor unit 2 includes an expansion valve 6, an evaporator 7, and an indoor blower 7a, for example, and expansion valve 6 and evaporator 7 are connected to each other by a pipe.

Compressor 3 of outdoor unit 1 and evaporator 7 of indoor unit 2 are connected to each other by gas pipe 9. Condenser 5 of outdoor unit 1 and expansion valve 6 of indoor unit 2 are connected to each other by liquid pipe 8.

Such a configuration of the refrigeration cycle apparatus forms a refrigerant circuit 100, and allows refrigerant to circulate in refrigerant circuit 100 through liquid pipe 8 and gas pipe 9.

Compressor 3 compresses refrigerant which has been converted into a gaseous state in gas pipe 9. Condenser 5 cools the gaseous refrigerant, which has been compressed by compressor 3, into high-pressure liquid refrigerant or gas-liquid two-phase refrigerant. Expansion valve 6 reduces the pressure of the high-pressure liquid refrigerant or gas-liquid two-phase refrigerant. Evaporator 7 heats the pressure-reduced refrigerant into low-pressure gaseous refrigerant. Compressor 3 sucks and re-compresses the refrigerant which has been converted by evaporator 7 into the low-pressure gaseous refrigerant.

Outdoor blower 5a is a component that blows air to condenser 5, and provided to promote refrigerant flowing in condenser 5 to exchange heat with air and thereby absorb or release heat. Indoor blower 7a is a component that blows air to evaporator 7, and provided to promote refrigerant flowing in evaporator 7 to exchange heat with air and thereby absorb or release heat.

The description in connection with the present embodiment is given for the configuration for causing condenser 5 and evaporator 7 to exchange heat with air. The present invention, however, is not limited to such a configuration, and may be configured to exchange heat with liquid such as water, rather than air, for example.

The description in connection with the present embodiment is given for the configuration where evaporator 7 is placed within indoor unit 2. The present invention, however, is not limited to such a configuration, and may place condenser 5 indoors and evaporator 7 outdoors, for example.

In outdoor unit 1 as described above, a four-way valve or a combination of a plurality of valves, for example, may be placed, and a switch mechanism that makes a switch between a suction pipe and a discharge pipe of compressor 3 may be provided. The switch mechanism is provided to enable a heat exchanger in outdoor unit 1 to function as evaporator 7, and a heat exchanger in indoor unit 2 to function as condenser 5, thereby enabling a room to be warmed by means of outdoor heat.

The refrigeration cycle apparatus may be any of an apparatus capable of both cooling and heating, an apparatus capable of cooling only, or an apparatus capable of heating only, for example.

The description in connection with the present embodiment is given for the configuration where expansion valve 6 is placed within indoor unit 2. The present invention, however, is not limited to this configuration, and may place expansion valve 6 within outdoor unit 1, for example. Moreover, expansion valve 6 may be provided in each of both outdoor unit 1 and indoor unit 2, for example. Further, a plurality of indoor units 2 and/or a plurality of indoor units 2 may be placed in refrigerant circuit 100, for example.

### Compressor

In the present embodiment, the refrigeration cycle apparatus includes the compressor. The refrigerant flows through the inside of the compressor. At least one of members constituting the compressor is a copper-containing member.

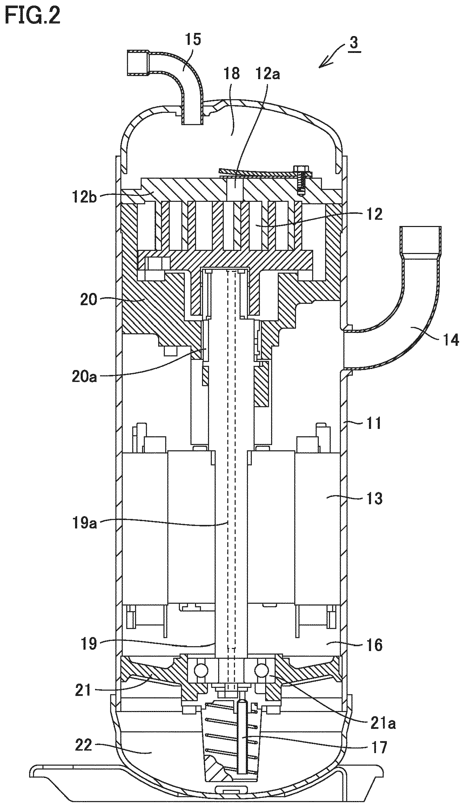

FIG. 2 is a schematic cross-sectional view showing an example of the compressor of the refrigeration cycle apparatus according to the present embodiment.

Compressor 3 includes a shell 11 as shown in FIG. 2. Shell 11 includes a compression mechanism 12 within the shell, and includes, within a lower space 16, a motor 13 for driving compression mechanism 12. To shell 11, a suction pipe 14 (gas pipe 9 in FIG. 1) for allowing refrigerant containing a halogenated hydrocarbon as described above into the shell, as well as a discharge pipe 15 for allowing refrigerant to flow out of the shell are connected.

Refrigerant flowing in from suction pipe 14 flows into lower space 16 where motor 13 for example is placed. The refrigerant flowing into lower space 16 passes through a gap for example of motor 13 to cool motor 13. The refrigerant is thereafter sucked into compression mechanism 12, passed through a discharge port 12a of compression mechanism 12 and an upper space 18 of shell 11, and discharged from discharge pipe 15 connected to upper space 18. Specifically, compression mechanism 12 is configured to compress refrigerant flowing from suction pipe 14 into shell 11, and discharge the refrigerant from discharge pipe 15.

Compression mechanism 12 is of a scroll type having a combination of teeth of a fixed scroll and teeth of an orbiting scroll. The orbiting scroll orbits to cause refrigerant to be sucked through a space between teeth of the orbiting scroll and those of the surrounding fixed scroll, thereby compressed toward the center, and then discharged from discharge port 12a at the center of a base plate 12b of the fixed scroll, into upper space 18.

Upper space 18 and lower space 16 are separated from each other by base plate 12b of the fixed scroll. Upper space 18 is smaller in volume than lower space 16, and the pressure in most of the inside of shell 11 is equal to the pressure of the sucked refrigerant. In other words, compressor 3 shown in FIG. 2 is a low-pressure shell-type compressor.

Motor 13 transmits force to compression mechanism 12 through a driveshaft 19 for compressing refrigerant. For example, a crank is placed in compressor 3, and this crank converts rotation of driveshaft 19 into the orbiting motion of the orbiting scroll.

Compressor 3 includes a frame 20 having a bearing for rotatably holding driveshaft 19, and includes a sub-frame 21 below frame 20.

Compressor 3 includes a sliding part for a bearing for example of driveshaft 19. For lubricating the sliding part, compressor 3 has an oil receptacle 22 which is located in a lower part and in which refrigeration oil is contained. The refrigeration oil contained in oil receptacle 22 is supplied through an oil supply hole 19a located within driveshaft 19 to the bearing for driveshaft 19 and to the sliding part inside compression mechanism 12. Compressor 3 of the low-pressure shell type supplies lubricating oil into compression mechanism 12 through oil supply hole 19a, and therefore, an oil pump 17 is placed under driveshaft 19.

The description in connection with the above refrigeration cycle apparatus is given for an embodiment where a scroll compressor of the low-pressure shell type is used as compressor 3. The present invention, however, is not limited to such an embodiment, and may use, as compressor 3, a scroll compressor of a high-pressure scroll type, a rotary compressor, a screw compressor, or the like.

It is known that the temperature of discharge port 12a inside compression mechanism 12 reaches a high temperature of 60 °C or more (100 °C or more in some cases), and accordingly, motor 13 is apt to reach a high temperature as well.

In the case for example where an organic insulating material is used as an insulating material for a coil of motor 13, it is preferable to use, as compressor 3, a scroll compressor of the low-pressure shell type having a relatively low temperature while operating, in consideration of the heatproof temperature of the insulating material, for example.

### Refrigerant

The refrigeration cycle apparatus according to the present embodiment includes refrigerant circuit 100 as described above, and allows refrigerant containing a halogenated hydrocarbon to circulate in this refrigerant circuit 100.

Refrigerant used for the present embodiment contains a halogenated hydrocarbon having any one of C-I bond, C-Br bond, and C-Cl bond and having no double bond.

An example of such a halogenated hydrocarbon is trifluoroiodomethane. Trifluoroiodomethane (CF₃I) is low in GWP value and non-flammable, and may therefore contribute to enhancement of the safety of an air conditioner.

It is known that a halogenated hydrocarbon having any one of C-I bond, C-Br bond, and C-Cl bond and having no double bond can be used, as non-flammable refrigerant, like trifluoroiodomethane, for a refrigeration cycle apparatus and the like.

It should be noted, however, that when the above-described halogenated hydrocarbon such as trifluoroiodomethane is brought into contact with copper, there is a possibility that reaction between the halogenated hydrocarbon and copper causes the halogenated hydrocarbon to be decomposed. Decomposition of the halogenated hydrocarbon results in change of the total amount and the makeup of refrigerant, possibly resulting in deterioration of the performance of the refrigerant. There is thus a possibility that the performance of the refrigeration cycle apparatus cannot be maintained.

In view of the above, the refrigeration cycle apparatus according to the present embodiment is configured, when at least one of members constituting the refrigerant circuit is a copper-containing material, so as not to cause at least a part of a surface of the copper-containing member to contact the refrigerant.

In this way, contact between the refrigerant and the copper-containing member constituting the refrigerant circuit can be reduced and thereby a decomposition reaction of the refrigerant caused by contact with copper can be suppressed. When the copper-containing member is a tubular member such as pipe, the inner surface of the tubular member (the surface contacting liquid or gas flowing therein) is also exposed, and therefore, the inner surface of the tubular member is also "surface" of the copper-containing member.

A mixture of trifluoroiodomethane and refrigeration oil was checked for chemical stability under the conditions in Table 1 in accordance with an experimental method complying with JIS K2211:2009 (Appendix B: Sealed Tube Test).

**[Table 1]**

| | |
|---|---|
| Test container | 50 cm³ |
| Refrigerant | trifluoroiodomethane (commercially available product) |
| Mass of refrigerant | 7 g |
| Refrigeration oil | polyvinyl ether (commercially available product) |
| Weight of refrigeration oil | 15 g |
| Metal catalyst | rod-shaped metal catalyst having a diameter of 1 mm and a length of 50 mm (commercially available product) |
| Temperature | 100 °C, 120 °C or 140 °C |
| Period | 3 days |

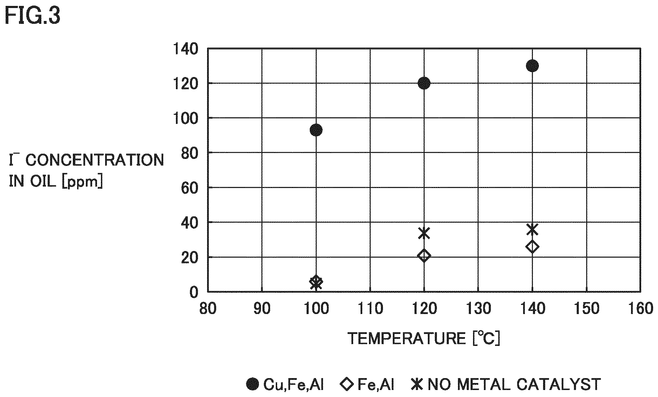

FIG. 3 shows the results of measurement of the concentration of iodide ions (I⁻) that are a product of decomposition of trifluoroiodomethane contained in refrigeration oil after experiment (I⁻ concentration in oil), for each of the case where a metal catalyst containing copper (Cu), iron (Fe), and aluminum (Al) is used, the case where a metal catalyst containing iron (Fe) and aluminum (Al) is used, and the case where no metal catalyst is contained. The concentration was measured by ion chromatography.

It is seen from the results shown in FIG. 3 that the presence of copper catalyst considerably increases the amount of generated iodide ions that are a product of decomposition of trifluoroiodomethane. It is also seen that the higher the temperature, the greater the amount of generated iodide ions.

The presence of copper considerably increases the amount of generated iodide ions, because trifluoroiodomethane contacting copper makes a direct reaction represented by the following Chemical Formula 1 to generate iodide copper (I) (CuI) and iodide ions are generated from CuI.

Chemical Formula 1: CF₃I + 2Cu → CuI + CuCF₃

This reaction is caused because the C-I bond of CF₃I (bonding energy: about 50 kcal/mol) is a weaker bond than halogen-carbon bond such as C-F bond (bonding energy: about 128 kcal/mol). It is therefore considered that even a halogenated hydrocarbon other than trifluoroiodomethane makes a similar reaction, as long as it is a halogenated hydrocarbon having at least one of C-I bond, C-Br bond (bonding energy: about 67 kcal/mol), and C-Cl bond (bonding energy: about 95 kcal/mol) with a smaller bonding energy than the halogen-carbon bond.

It is accordingly considered that a halogenated hydrocarbon having at least one of C-I bond, C-Br bond, and C-Cl bond and having no double bond may be decomposed due to reaction with copper.

In view of the foregoing, it is considered, for the refrigeration cycle apparatus (refrigerant circuit) for which refrigerant containing such a halogenated hydrocarbon is used, the extent to which refrigerant contacts copper can be reduced to thereby suppress a decomposition reaction of the refrigerant (halogenated hydrocarbon).

For components constituting refrigerant circuit 100 (refrigeration cycle apparatus), however, generally a member containing copper (copper-containing member) is often used. For example, a copper-containing member is often used for compressor 3, condenser 5, expansion valve 6, evaporator 7, liquid pipe 8, gas pipe 9, and the like. As for compressor 3, for example, a copper-containing member is often used for suction pipe 14, discharge pipe 15, motor 13 (conducting wire), a bearing 20a, a sub-bearing 21a, frame 20 (oil discharge pump), an injection pipe (not shown), and the like.

These are each given as an example of the copper-containing member constituting refrigerant circuit 100, and the copper-containing member constituting the refrigerant circuit of the present invention is not limited to such members.

The copper-containing member is not particularly limited as long as the copper-containing member is a member containing copper, and may be a metal member made of copper or an alloy containing copper. Examples of the alloy containing copper are brass, bronze, nickel, red brass, beryllium copper, albata, gunmetal, and the like.

In the present embodiment, at least one of members constituting the refrigerant circuit is a copper-containing member, and at least a part of the surface of the copper-containing member does not contact refrigerant. In other words, in consideration of decomposition of refrigerant due to reaction with copper, the surface of at least a part of a copper-containing member constituting refrigerant circuit 100 is configured not to contact the refrigerant. Specifically, for example, at least a part of a copper-containing member of the compressor and the condenser in the refrigerant circuit as well as a pipe connecting the compressor and the condenser is configured not to contact refrigerant.

In this way, reaction between copper and the above-described halogenated hydrocarbon having at least one of C-I bond, C-Br bond, and C-Cl bond and having no double bond is suppressed and accordingly decomposition of the refrigerant is suppressed, which therefore suppresses deterioration of the performance of the refrigerant. Accordingly, deterioration of the performance of the refrigeration cycle apparatus is suppressed.

### Embodiment 2

In the present embodiment, at least a part of the surface of a copper-containing member is coated with a coating material that is inactive for the above-described halogenated hydrocarbon, i.e., a coating material containing no copper, so that at least a part of the surface of the copper-containing member does not contact refrigerant. Other characteristics are similar to those of Embodiment 1, and therefore, the description thereof is not herein repeated.

The coating material containing no copper is not particularly limited, as long as the material contains no copper, and may for example be hard material, resin material, or the like. For coating at least a part of the surface of a copper-containing member with a coating material, the part is coated with the coating material to the extent that does not expose the surface of the copper-containing member to be coated.

The hard material may be any of tin, nickel, chromium, aluminum, iron, molybdenum, graphite, diamond-like carbon, and the like, for example. These are inactive for the above-described halogenated hydrocarbon such as trifluoroiodomethane.

The resin material may be any of polyethylene terephthalate (PET), polybutylene terephthalate, polyphenylene sulfide, polyimide, polyamide, and the like, for example. These are stable for the above-described halogenated hydrocarbon such as trifluoroiodomethane.

A combination of two or more different coating materials containing no copper as described above may also be used.

A mixture of trifluoroiodomethane and refrigeration oil was checked for chemical stability under the conditions in Table 1 in accordance with an experimental method complying with JIS K2211:2009 (Appendix B: Sealed Tube Test).

As metal catalysts, a copper catalyst (a commercially available copper wire), a tincoated copper catalyst (a commercially available tin-plated copper wire), a nickel-coated copper catalyst (a commercially available nickel-plated copper wire), and a PET-coated copper catalyst (a commercially available copper wire with its surface coated with a commercially available PET film) were used.

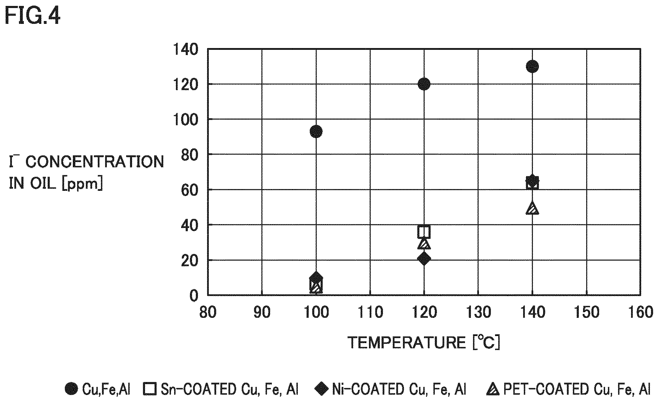

FIG. 4 shows the results of measurement of the concentration of iodide ions (I⁻) that are a product of decomposition of trifluoroiodomethane contained in refrigeration oil after experiment (I⁻ concentration in oil), for each of the cases where the respective metal catalysts are used. The concentration was measured by ion chromatography.

It is seen from the results shown in FIG. 4 that the coating of the surface of metal which contains copper (copper-containing member) with tin (Sn), nickel (Ni), or polyethylene terephthalate (PET) considerably reduces the amount of generated iodide ions that are a product of decomposition of trifluoroiodomethane.

In view of these results, it is considered that coating of at least a part of the surface of a copper-containing member constituting the refrigerant circuit with a coating material containing no copper enables decomposition of the above-described halogenated hydrocarbon such as trifluoroiodomethane to be suppressed.

For example, at least a part of the surface of a component (copper-containing member) such as compressor 3 and condenser 5 constituting refrigerant circuit 100 as well as a pipe connecting the compressor and the condenser is coated with the above-described coating material. At least one component (copper-containing member) of components such as condenser 5, expansion valve 6, evaporator 7, liquid pipe 8, gas pipe 9, suction pipe 14, discharge pipe 15, motor 13 (conducting wire), bearing 20a, sub-bearing 21a, frame 20, an injection pipe, and the like, for example, may be coated with the above-described coating material.

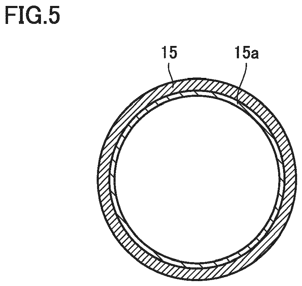

FIG. 5 is a cross-sectional view of discharge pipe 15 of compressor 3 in which a coating material 15a covers the inner portion of discharge pipe 15, as an example of the present embodiment. Thus, the whole face that is included in the surface of the aforementioned at least one component and is to be brought into contact with refrigerant may be coated with the above-described coating material. Alternatively, the whole of the surface of the at least one component may be coated with the above-described coating material.

The surface of at least one of copper-containing members constituting refrigerant circuit 100 is coated with a coating material so that the surface does not contact refrigerant. In this way, reaction between the above-described halogenated hydrocarbon and copper is suppressed to thereby suppress deterioration of the performance of the refrigerant and deterioration of the performance of the copper-containing member is suppressed. Accordingly, deterioration of the performance of the refrigeration cycle apparatus is suppressed.

### Embodiment 3

The surface of a copper wire used as a conducting wire for motor 13 of compressor 3 is coated with the above-described coating material. Further, a member with no copper exposed from the surface of the member is used as bearing 20a. Other characteristics are similar to those of Embodiment 2, and therefore, the description thereof is not herein repeated.

In this way, reaction between the above-described halogenated hydrocarbon and copper is suppressed, to thereby suppress decomposition (deterioration of the performance) of refrigerant and also suppress degradation of members constituting compressor 3. Accordingly, deterioration of the performance of the refrigeration cycle apparatus is suppressed.

### Embodiment 4

In the present embodiment, at least a part of the surface of a copper-containing member is a part that may reach a temperature of 60 °C or more, and this part is coated with the above-described coating material. Other characteristics are similar to those of Embodiment 2, and therefore, the description thereof is not herein repeated.

On the part that may reach a temperature of 60 °C or more, the above-described halogenated hydrocarbon in refrigerant is apt to decompose, and therefore, this part of the copper-containing member can be prevented from contacting refrigerant to thereby efficiently suppress decomposition of the refrigerant.

A mixture of trifluoroiodomethane and refrigeration oil was checked for chemical stability under the conditions in Table 1 in accordance with an experimental method complying with JIS K2211:2009 (Appendix B: Sealed Tube Test), except that the temperature condition in Table 1 was changed to 50 °C, 60 °C, 80 °C, 100 °C, 120 °C, or 140 °C. A metal catalyst containing copper, iron, and aluminum was used.

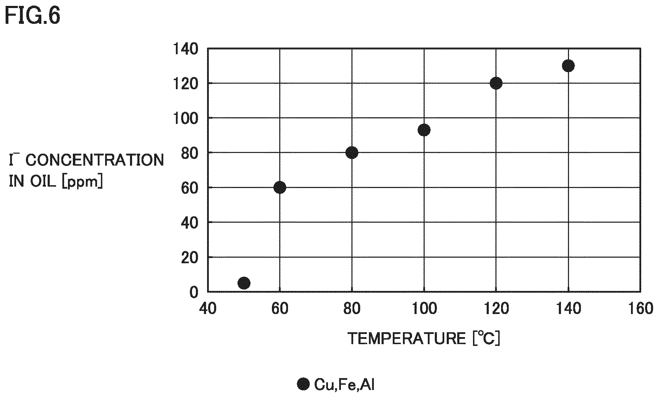

It is seen from the results shown in FIG. 6 that in the co-presence with the metal catalyst containing copper (copper-containing member), the amount of generated iodide ions that are a product of decomposition of trifluoroiodomethane is considerably increased under a temperature condition of 60 °C or more.

Among copper-containing members (members made of copper or an alloy containing copper, for example) constituting refrigerant circuit 100, members that may reach a temperature of 60 °C or more may be compressor 3 and condenser 5, for example. In particular, such members that constitute compressor 3 and may reach a temperature of 60 °C or more may be discharge pipe 15, motor 13 (conducting wire), bearing 20a, sub-bearing 21a, frame 20 (oil discharge pump), an injection pipe (not shown), and the like.

### Embodiment 5

In the present embodiment, at least one of members constituting the refrigerant circuit is a member containing no copper. Other characteristics are similar to those of embodiments such as Embodiment 1, and therefore, the description thereof is not herein repeated.

A member containing no copper is used as a member constituting the refrigerant circuit to thereby reduce contact between copper and refrigerant and accordingly suppress a decomposition reaction of the refrigerant, like the other embodiments.

The member containing no copper is not particularly limited as long as the member contains no copper, and may for example be a metal member made of aluminum, iron, or the like.

As shown in FIG. 3, iron and aluminum are inactive for the above-described halogenated hydrocarbon such as trifluoroiodomethane. Therefore, among members constituting refrigerant circuit 100, a component generally made of copper can be replaced with a component made of iron or aluminum to suppress decomposition of refrigerant containing the above-described halogenated hydrocarbon.

For example, generally components such as condenser 5, expansion valve 6, evaporator 7, liquid pipe 8 and gas pipe 9, suction pipe 14, discharge pipe 15, motor 13 (conducting wire), bearing 20a, sub-bearing 21a, frame 20, and an injection pipe are often made of copper. These components may be made of aluminum or iron.

It should be construed that the embodiments disclosed herein are given by way of illustration in all respects, not by way of limitation. It is intended that the scope of the present invention is defined by claims, not by the description above, and encompasses all modifications and variations equivalent in meaning and scope to the claims.

### LIST OF REFERENCE SIGNS

- 1: outdoor unit
- 2: indoor unit
- 3: compressor
- 5: condenser
- 5a: outdoor blower
- 6: expansion valve
- 7: evaporator
- 7a: indoor blower
- 8: liquid pipe
- 9: gas pipe
- 11: shell
- 12: compression mechanism
- 12a: discharge port
- 12b: base plate
- 13: motor
- 14: suction pipe
- 15: discharge pipe
- 15a: coating material
- 16: lower space
- 17: oil pump
- 18: upper space
- 19: driveshaft
- 19a: oil supply hole
- 20: frame
- 20a: bearing
- 21: sub-frame
- 21a: sub-bearing
- 22: oil receptacle
- 100: refrigerant circuit

## Claims

1. A refrigeration cycle apparatus comprising a refrigerant circuit and allowing refrigerant containing a halogenated hydrocarbon to circulate in the refrigerant circuit, wherein
the halogenated hydrocarbon has at least one of C-I bond, C-Br bond, and C-Cl bond and has no double bond, and
at least one of the members constituting the refrigerant circuit is a copper-containing member, and at least a part of a surface of the copper-containing member does not contact the refrigerant.

2. The refrigeration cycle apparatus according to claim 1,
wherein the at least a part of the surface of the copper-containing member is coated with a coating material containing no copper.

3. The refrigeration cycle apparatus according to claim 2,
wherein the coating material is tin, nickel, chromium, aluminum, iron, molybdenum, graphite, diamond-like carbon, polyethylene terephthalate, polybutylene terephthalate, polyphenylene sulfide, polyimide, polyamide, or a combination of two or more thereof.

4. The refrigeration cycle apparatus according to any one of claims 1 to 3,
wherein the at least a part of the surface of the copper-containing member is a part that may reach a temperature of 60 °C or more.

5. The refrigeration cycle apparatus according to any one of claims 1 to 4,
wherein
the refrigeration cycle apparatus comprises a compressor,
the refrigerant flows through an inside of the compressor, and
the copper-containing member includes a member constituting the compressor.

6. The refrigeration cycle apparatus according to claim 5,
wherein the copper-containing member includes a copper wire used as a conducting wire for a motor of the compressor.

7. The refrigeration cycle apparatus according to any one of claims 1 to 6,
wherein the halogenated hydrocarbon is trifluoroiodomethane.

8. A refrigeration cycle apparatus comprising a refrigerant circuit and allowing refrigerant containing a halogenated hydrocarbon to circulate in the refrigerant circuit,
wherein
the halogenated hydrocarbon has at least one of C-I bond, C-Br bond, and C-Cl bond and has no double bond, and
at least one of members constituting the refrigerant circuit is a member containing no copper.
